(19) Europäisches Patentamt
European Patent Office
Office européen des brevets

(11) EP 1 849 809 A1

(12) EUROPEAN PATENT APPLICATION

(43) Date of publication:
**31.10.2007 Bulletin 2007/44**

(51) Int Cl.:
***C08F 259/08*** *(2006.01)*

(21) Application number: **06113122.3**

(22) Date of filing: **26.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Solvay Solexis S.p.A.**
**20121 Milano (IT)**

(72) Inventors:
- **Palamone, Giovanna**
**15100, Alessandria (IT)**
- **Poggio, Tiziana**
**15010, Montechiaro d'Acqui (IT)**
- **Kapeliouchko, Valeri**
**15000, Alessandria (IT)**
- **Laus, Michele**
**15100, Alessandria (IT)**

(74) Representative: **Jacques, Philippe et al**
**Solvay S.A.**
**Département de la Propriété Industrielle,**
**Rue de Ransbeek, 310**
**1120 Bruxelles (BE)**

# (54) Tetrafluoroethylene polymer particles

(57) The present invention relates to core-shell particles comprising comprising :
- a core consisting essentially of at least one tetrafluoroethylene (TFE) polymer [polymer (F)], said core having an average primary particle size of less than 50 nm; and
- a shell consisting essentially of at least one acrylic polymer [polymer (A)], said polymer (A) comprising recurring units, more than 50 % by moles of said recurring units being derived from at least one ethylenically unsaturated monomer having directly bonded to one of the $sp^2$ carbon atoms of the ethylenic unsaturation at least one group of formula:

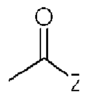

wherein Z is a group selected among -OR', wherein R' can be a hydrogen atom or a $C_{1-10}$ hydrocarbon group; and -NR"R"', wherein R" and R"', equal or different each other, can be independently a hydrogen atom or a $C_{1-10}$ hydrocarbon group [hereinafter, acrylic monomer (AM)].
Still objects of the invention are a process for manufacturing said core-shell particles, their use as ingredients/additives in polymer compositions, polymer composition and articles comprising the same.

EP 1 849 809 A1

## Description

Technical Field

The present invention relates to core-shell particles comprising a core of a tetrafluoroethylene (TFE) polymer and a shell of an acrylic polymer.

Another object of the invention is a process for manufacturing said core-shell particles.

Still an object of the invention is the use of said core-shell particle as ingredients/additives in polymer compositions.

The present invention also relates to a polymer composition comprising said core-shell particles, which exhibits usually high transparency, excellent flame resistance and lightweight and outstanding mechanical properties.

The present invention finally relates to the article thereof.

Background Art

Fluorocarbon resins, especially polytetrafluorothylene (PTFE) resins, have been used in the past for the flammability improvement of different polymer materials, in particular for acrylic polymers.

Nevertheless, dispersing PTFE materials in acrylic polymers matrix is not easy; an uneven dispersion can affect the efficiency in reducing the heat release; moreover, the resulting compositions exhibit a pearlescent opaque appearance. These materials are thus difficult to colour and cannot be used in application where transparency is required.

Core-shell structures have been thus provided in the past for notably improving dispersibility of PTFE particles in polymer matrices.

GB 952452 A (AMERICAN MACHINE & FOUNDRY COMPANY) 18.03.1964 discloses a process for manufacturing a fluoropolymer composition comprising contacting a fluoropolymer material, such as, *inter alia,* a tetrafluoroethylene polymer, in the form of an aqueous emulsion or a coagulated emulsion of particles from 0.05 to 5 μm with ethylenically unsaturated monomeric material in liquid phase and polymerizing said material in the absence of a radical initiator. Among the long list of monomers cited, mention is made, *inter alia,* of acrylic monomers, such as methyl methacrylate, methyl acrylate.

EP 735093 A (DAIKIN INDUSTRIES, LTD) 02.10.1996 discloses core-shell composite fine particles having mean particles size of 0.05 to 1 μm, having a core of a fibrillating polytetrafluoroethylene and a shell of non-fibrillating polymer; the non-fibrillating polymer for forming the shell can be a low molecular weight PTFE, polyvinylidene fluoride (PVDF), fluorine-containing copolymer comprising at least one of tetrafluoroethylene, vinylidene fluoride and chlorotrifluoroethylene as component monomer, or at least one polymer selected from those prepared from a liquid hydrocarbon monomer (e.g. acrylic and methacrylic monomers). Said core-shell particles can be notably obtained by so-called seed polymerization.

EP 739914 A (GENERAL ELECTRIC COMPANY) 30.10.1996 discloses polymer blends comprising tetrafluoroethylene polymerizate particles (having average size between 0.05 and 20 μm, preferably between 0.1 and 1 μm), totally or partially encapsulated by another polymer. Among encapsulating polymers, mention is made, *inter alia,* of acrylic polymers such as polyacrylonitrile, polymethacrylonitrile, poly(alkyl acrylates), poly(alkyl methacrylates). Said encapsulated blends can be obtained by emulsion polymerizing a monomer or a mixture of monomers in the presence of a polytetrafluorothylene latex.

US 5679741 B (GENERAL ELECTRIC COMPANY) 21.10.1997 discloses tetrafluoroethylene polymerizate particles (having average size between 0.05 and 20 μm, preferably between 0.1 and 1 μm) totally or partially encapsulated in a copolymer chosen from polyalkyl(meth)acrylates, poly(vinylacetate), styrene-acrylonitrile and styrene-acrylonitrile-alkyl(meth)acrylate copolymers. Said TFE polymerizate-base polymer blends can be prepared by emulsion polymerization in a polytetrafluoroethylene latex.

KIPP, B.E., et al. Preparation of PTFE and PTFE/PMMA Core-Shell composite particles in CO2/aqueous systems. Polym. Prepr (Am. Chem. Soc., Div. Polym. Chem.). 1997, vol.38, no.1, p.76-77. discloses a process for synthesizing a composite material consisting of a PTFE core and a thin polymethylmethacrylate (PMMA) shell in a $CO_2$/aqueous system. Particles having diameters of approximately 50-70 nm are disclosed.

Nevertheless, all these core-shell materials are not suitable for being used in combination with acrylic polymers to yield transparent compositions, as the size of the tetrafluoroethylene nuclei is too coarse.

The term transparent, generally used as synonymous of clear, is a measure of the ability of a material to transmit image-forming light. It may be thought of as the distinctness with which an object appears when viewed through the material. Therefore, transparency depends on the linearity of the passage of light rays through the material.

Generally, when light interacts with matter, it can be reflected, absorbed, scattered, or transmitted. An object is generally described as "transparent" if a significant fraction of the incident light is transmitted through the object. An object is considered "opaque" if very little light is transmitted through it. And object is considered "translucent" if some

light passes through but not in a way that a coherent image can be seen through it. Typically, this occurs if light must take a circuitous path through the object, scattering from embedded particles, defects or grain boundaries.

Scattering generally results from the interaction of light with inhomogeneities of the matter. The actual entity that causes scattering is in general called scattering center. Scattering becomes more effective when the size of the scattering center is similar to the wavelength of the incident light. As a reminder, Table 1 summarizes the approximate wavelengths of visible light.

Table 1

| Color | Approximate Wavelength (nm) |
|---|---|
| White | 400 - 800 |
| Violet | 390 - 455 |
| Blue | 455 - 495 |
| Green | 495 - 575 |
| Yellow | 575 - 600 |
| Orange | 600 - 625 |
| Red | 625 - 780 |

When scattering centers are smaller in size than the wavelength of the incident light, scattering is much less effective. Typically, primary particles having diameter of no more than approximately one tenth of the visible light wavelength do not contribute significantly to the observed scattering. Primary particles having diameter of 50 nm or more are generally known for providing a non negligible contribution to light scattering.

Core-shell particles of the prior art comprising PTFE cores of large size are not suitable for minimizing light scattering and thus provide for transparent materials.

There is thus a need in the acrylic polymers domain for additives yielding transparent materials having reduced heat release during combustion and improved flammability properties.

Disclosure of Invention

According to the present invention, the above-mentioned difficulties and others are remarkably overcome by the core-shell particle of the invention, said particle comprising :

- a core consisting essentially of at least one tetrafluoroethylene (TFE) polymer [polymer (F)], said core having an average primary particle size of less than 50 nm; and
- a shell consisting essentially of at least one acrylic polymer [polymer (A) ].

The core-shell particles of the invention advantageously allow obtaining moulded articles with homogeneous properties, both when used alone and when used as additive, as they generally do not undergo segregation phenomena.

Because the PTFE core average primary size is approximately one tenth or less of the wavelength of visible light, core-shell particles of the invention advantageously hardly scatter visible light, thereby making their dispersion to be transparent. When combined with plastic compositions, the core-shell particles of the invention can be easily dispersed and advantageously provide for compositions displaying an unexpected combination of excellent mechanical properties, excellent chemical resistance, excellent optical properties (transparency and colourability) and low flammability.

Moreover, compositions comprising the core-shell particles according to the invention are notably easy to process, providing articles having smooth and aesthetically pleasing surface characteristics. The invented materials are advantageously readily pigmented in a wide range of colours, and are useful in a number of applications, in particular for the construction of various panels and parts for aircraft interiors.

For the purpose of the invention, the term "polymer" is intended to denote any material consisting essentially of recurring units, and having a molecular weight above 3000.

For the purpose of the invention, the term "oligomer" is intended to denote any material consisting essentially of recurring units, and having a molecular weight below 3000.

For the purpose of the invention the term "particle" is intended to denote a mass of material that, from a geometrical point of view, has a definite three-dimensional volume and shape, characterized by three dimensions, wherein, generally, none of said dimensions exceed the remaining two other dimensions of more than 10 times. Particles are generally not equidimensional, i.e. are longer in one direction than in others.

The shell consisting essentially of polymer (A) advantageously takes the form of a material disposed on the core, preferably completely surrounding (e.g., encapsulating) the core. Still, it is possible for production processes to

result in particles wherein the shell does not completely surround the core, but only partially covers the core, leaving a portion of the core exposed. These particles, if produced, will typically be present in relatively small amounts, typically less than 10 % compared to core-shell particles where the shell does completely surround or encapsulate the core.

The core and/or the shell of the particles of the invention may further comprise other additives and other ingredients which are used in the manufacturing process. Said components are generally present in reduced amount, typically as traces, and do not interfere with the properties and chemical behaviour of the particles of the invention.

The TFE polymer (F) is advantageously chosen among homopolymers of tetrafluoroethylene (TFE) or copolymers of TFE with at least one ethylenically unsaturated comonomer [comonomer (CM)].

The comonomer (CM) is present in the TFE copolymer in an amount advantageously from 0.01 to 3 % by moles, preferably from 0.01 to 1 % by moles, with respect to the total moles of TFE and comonomer (CM).

In the rest of the text, the expressions "ethylenically unsaturated comonomer" and "comonomer (CM)" are understood, for the purposes of the present invention, both in the plural and the singular, that is to say that they denote both one or more than one comonomer (CM).

The comonomer (CM) can comprise at least one fluorine atom (fluorinated comonomer) or can be free of fluorine atoms (hydrogenated comonomer).

Among hydrogenated comonomers mention can be notably made of ethylene; propylene; acrylic monomers, such as for instance methylmethacrylate, (meth)acrylic acid, butylacrylate, hydroxyethylhexylacrylate; styrenic monomers, such as for instance styrene.

Non limitative examples of suitable fluorinated comonomers are notably :

- $C_3$-$C_8$ perfluoroolefins, such as hexafluoropropene;
- $C_2$-$C_8$ hydrogenated fluoroolefins, such as vinyl fluoride (VF), vinylidene fluoride (VDF), 1,2-difluoroethylene and trifluoroethylene;
- perfluoroalkylethylenes complying with formula $CH_2$=CH-$R_{f0}$, in which $R_{f0}$ is a $C_1$-$C_6$ perfluoroalkyl;
- chloro- and/or bromo- and/or iodo-$C_2$-$C_6$ fluoroolefins, like chlorotrifluoroethylene (CTFE);
- (per)fluoroalkylvinylethers complying with formula $CF_2$=CFOR$_{f1}$ in which $R_{f1}$ is a $C_1$-$C_6$ fluoro- or perfluoroalkyl, e.g. $CF_3$, $C_2F_5$, $C_3F_7$;
- $CF_2$=CFOX$_0$ (per)fluoro-oxyalkylvinylethers, in which $X_0$ is a $C_1$-$C_{12}$ alkyl, or a $C_1$-$C_{12}$ oxyalkyl, or a $C_1$-$C_{12}$ (per) fluorooxyalkyl having one or more ether groups, like perfluoro-2-propoxy-propyl;
- (per)fluoro-methoxyalkylvinylethers complying with formula $CF_2$ =CFOCF$_2$OR$_{f2}$ in which $R_{f2}$ is a $C_1$-$C_6$ fluoro- or perfluoroalkyl, e.g. -$CF_3$,- $C_2F_5$, -$C_3F_7$ or a $C_1$-$C_6$ (per)fluorooxyalkyl having one or more ether groups, like -$C_2F_5$-O-$CF_3$;
- functional (per)fluoroalkylvinylethers complying with formula $CF_2$=CFOY$_0$, in which $Y_0$ is a $C_1$-$C_{12}$ alkyl or (per) fluoroalkyl, or a $C_1$-$C_{12}$ oxyalkyl, or a $C_1$-$C_{12}$ (per)fluorooxyalkyl having one or more ether groups and $Y_0$ comprising a carboxylic or sulfonic acid group, in its acid, acid halide or salt form;
- fluorodioxoles of formula :

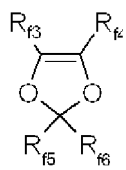

wherein each of $R_{f3}$, $R_{f4}$, $R_{f5}$, $R_{f6}$, equal of different each other, is independently a fluorine atom, a $C_1$-$C_6$ fluoro- or perfluoroalkyl, optionally comprising one or more oxygen atom, e.g. -$CF_3$, -$C_2F_5$, -$C_3F_7$, -$OCF_3$, -$OCF_2CF_2OCF_3$; preferably a perfluorodioxole complying with formula here above, wherein $R_{f3}$ and $R_{f4}$ are fluorine atoms and $R_{f5}$ and $R_{f6}$ are perfluoromethyl groups (-$CF_3$), or a perfluorodioxole complying with formula here above, wherein $R_{f3}$, $R_{f5}$ and $R_{f6}$ are fluorine atoms and $R_{f4}$ is a perfluoromethoxy group (-$OCF_3$).

The fluorinated comonomer can further comprise one or more other halogen atoms (Cl, Br, I). Shall the fluorinated comonomer be free of hydrogen atom, it is designated as per(halo)fluorocomonomer. Shall the fluorinated monomer comprise at least one hydrogen atom, it is designated as hydrogen-containing fluorinated comonomer.

The comonomer (CM) is preferably a fluorinated comonomer, more preferably a per(halo)fluorocomonomer.

Most preferably, the comonomer (CM) is chosen among hexafluoropropylene, perfluoromethylvinylether, perfluoroethylvinylether, perfluoropropylvinylether, perfluorodioxole of formula :

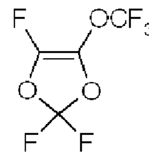

and mixtures thereof.

The polymer (F) is advantageously non melt-processable.

For the purposes of the present invention, by the term "non melt-processable" is meant that the polymer (F) cannot be processed (i.e. fabricated into shaped articles such as films, fibers, tubes, wire coatings and the like) by conventional melt extruding, injecting or casting means. Such typically requires that the dynamic viscosity at a shear rate of 1 $s^{-1}$ and at a temperature exceeding melting point of roughly 30°C, preferably at a temperature of $T_{m2}$ + (30 ± 2°C), exceed $10^7$ Pa × s, when measured with a controlled strain rheometer, employing an actuator to apply a deforming strain to the sample and a separate transducer to measure the resultant stress developed within the sample, and using the parallel plate fixture.

The polymer (F) has a dynamic viscosity of preferably more than $10^8$ Pa × s, more preferably more than $10^9$ Pa × s, even more preferably more than $10^{10}$ Pa × s.

The core-shell particle of the invention advantageously comprises at least 1 % wt, preferably at least 2 % wt, more preferably at least 3 % wt of TFE polymer (F) based on the total weight of core-shell particle.

The core-shell particle of the invention advantageously comprises at most 99 % wt, preferably at most 97.5 %wt, more preferably at most 95 % wt of TFE polymer (F) based on the total weight of core-shell particle.

Good results have been obtained with core-shell particles comprising from 3 to 95 wt % of polymer (F) based on the total weight of the core-shell particles.

Core-shell particles comprising from 45 to 95 wt % of polymer (F) based on the total weight of the core-shell particles are to be preferred in view of providing ingredients/additives for polymer compositions.

Particles having nanometric dimension (i.e. average primary particle size of less than 1 μm), are generally referred as nanoparticles.

The core consisting essentially of polymer (F) of the core-shell particle of the invention has an average primary particle size of less than 50 nm, preferably of less than 45 nm, more preferably of less than 40 nm.

The core consisting essentially of polymer (F) of the core-shell particle of the invention has an average primary particle size of advantageously more than 2 nm, preferably of more than 5 nm, more preferably of more than 10 nm, even more preferably of more than 15 nm, most preferably of more than 20 nm.

Good results have been obtained with a core-shell particle having a core of average primary particle size of more than 10 nm and less than 50 nm.

Excellent results have been obtained with core-shell particles having a core of average primary particle size of more than 20 nm and less than 40 nm.

The average primary particle size of the core can be measured by photon correlation spectroscopy (PCS) (method also referred to as dynamic laser light scattering (DLLS) technique) according to the method described in B. Chu "Laser light scattering" Academic Press, New York (1974), following ISO 13321 Standard.

It is well-known to the skilled in the art that the PCS gives an estimation of the average hydrodynamic diameter. To the purpose of this invention, the term "average size" is to be intended in its broadest meaning connected with the determination of the hydrodynamic diameter. Therefore, this term will be applied with no limit to the shape or morphology of the polymer (F) cores (cobblestone, rod-like, spherical, and the like).

It should be also understood that, following the purposes of ISO 13321 Standard, the term "average particle size" of primary particles is intended to denote the harmonic intensity-averaged particle diameter $X_{PCS}$, as determined by equation (C.10) of annex C of ISO 13321.

As an example, the average primary particle size can be measured by using a Malvern Zetasizer 3000 HS equipment at 90° scattering angle, using a 10mV He-Ne laser source and a PCS software (Malvern 1.34 version). Primary average particle size is preferably measured on latex specimens, as obtained from microemulsion polymerization, suitably diluted with bidistilled water and filtered at 0.2 μm on Millipore filter.

For the avoidance of doubt, within the context of this invention, the term primary particle is intended to denote nanoparticles of polymer (F) which cannot be analyzed in agglomerations of smaller particles; primary particle are generally obtained during polymer (F) manufacture, as latex or dispersion in water.

To the purpose of the present invention, the term "acrylic polymer [polymer (A)]" is intended to denote any polymer comprising recurring units, more than 50 % by moles of said recurring units being derived from at least one ethylenically unsaturated monomer having directly bonded to one of the $sp^2$ carbon atoms of the ethylenic unsaturation at least one group of formula:

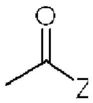

wherein Z is a group selected among -OR', wherein R' can be a hydrogen atom or a $C_{1-10}$ hydrocarbon group; and -NR"R"', wherein R" and R"', equal or different each other, can be independently a hydrogen atom or a $C_{1-10}$ hydrocarbon group [hereinafter, acrylic monomer (AM)].

In the rest of the text, the expressions "acrylic polymer" and "polymer (A)" are understood, for the purposes of the present invention, both in the plural and the singular, that is to say that they denote both one or more than one polymer (A).

Also, in the rest of the text, the expression " acrylic monomer (AM)" is understood, for the purposes of the present invention, both in the plural and the singular, that is to say that it denotes both one or more than one acrylic monomer (AM).

The acrylic polymer comprises more than 50 % by moles, preferably more than 70 % by moles, more preferably more than 80 % by moles, even more preferably more than 85 % by moles of recurring units derived from the acrylic monomer (AM) as above described.

Most preferably, the acrylic polymer consists essentially of recurring units derived from the acrylic monomer (AM) as above described.

Preferably the acrylic monomer (AM) is selected from alkyl acrylates, alkyl methacrylates, acrylic acid, methacrylic acid, acrylamide, alkyl acrylamides, methacrylamide and alkyl methacrylamides.

In a particularly preferred manner, the acrylic monomer (AM) is selected from alkyl acrylates whose alkyl radicals are linear or branched, optionally substituted with a hydroxyl or ether function, and which contain from 1 to 10 carbon atoms, alkyl methacrylates whose alkyl radicals are linear or branched, optionally substituted with a hydroxyl or ether function, and which contain from 1 to 10 carbon atoms, and mixtures thereof.

As examples of alkyl acrylates whose alkyl radicals are linear or branched, optionally substituted with a hydroxyl or ether function, and which contain from 1 to 10 carbon atoms, mention may be made of methyl acrylate, ethyl acrylate, isopropyl acrylate, n-butyl acrylate, isobutyl acrylate, t-butyl acrylate, hexyl acrylate, ethylhexyl acrylate, 2-hydroxyethyl acrylate and glycidyl acrylate.

As examples of alkyl methacrylates whose alkyl radicals are linear or branched, optionally substituted with a hydroxyl or ether function, and which contain from 1 to 10 carbon atoms, mention may be made of methyl methacrylate, ethyl methacrylate, isopropyl methacrylate, n-butyl methacrylate, isobutyl methacrylate, t-butyl methacrylate, hexyl methacrylate, ethylhexyl methacrylate, 2-hydroxyethyl methacrylate and glycidyl methacrylate.

In a most particularly preferred manner, the acrylic monomer is chosen from methyl methacrylate, methyl acrylate, ethyl acrylate, n-butyl acrylate, acrylic and methacrylic acid.

Good results have been obtained with methyl methacrylate, with mixtures of butyl acrylate and methacrylic acid or with mixtures of methyl methacrylate, ethyl acrylate and methacrylic acid.

The invention also relates to a process for manufacturing the core-shell particle as above described.

Thus, an object of the invention is a process for manufacturing a core-shell particle comprising :

- a core consisting essentially of at least one TFE polymer [polymer (F)], said core having an average primary particle size of less than 50 nm; and
- a shell consisting essentially of at least one acrylic polymer [polymer (A) ],
  said process comprising :

  (i) preparing a dispersion of polymer (F) nanoparticles in water [dispersion (D)];
  (ii) polymerizing at least one acrylic monomer (AM) in the presence of said dispersion (D).

By "dispersion" is meant that the polymer (F) particles are stably dispersed in the aqueous medium, so that settling of the particles does not occur within the time when the dispersion will be used. Such dispersions can be obtained directly by the process known as dispersion or emulsion polymerization (i.e. latex), optionally followed by concentration and/or further addition of surfactant.

Otherwise, dispersions can be prepared by any means known to those skilled in the art. The dispersions are usually prepared by means of size-reduction equipment, such as, for example, a high-pressure homogenizer, a colloid mill, a fast pump, a vibratory agitator or an ultrasound device. The dispersions are preferably prepared by means of a high-pressure homogenizer or colloid mill and in a particularly preferred way by means of a high-pressure homogenizer.

Most preferably the dispersion (D) is obtained from a process comprising a microemulsion polymerization step, comprising :

1. preparing an aqueous microemulsion of perfluoropolyether (PFPE) in water with a fluorinated surfactant;
2. polymerizing a monomer mixture comprising TFE in a aqueous medium comprising said microemulsion and a water-soluble radical initiator.

Within the context of the present invention, the term perfluoropolyether (PFPE) is intended to denote an oligomer comprising recurring units (R*), said recurring units comprising at least one ether linkage in the main chain and at least one fluorine atom (fluoropolyoxyalkene chain).
Preferably the recurring units R* of the (per)fluoropolyether are selected from the group consisting of :

(I) -CFX-O-, wherein X is -F or -$CF_3$; and
(II) -$CF_2$-CFX-O-, wherein X is -F or-$CF_3$ ; and
(III) -$CF_2$-$CF_2$-$CF_2$-O-; and
(IV) -$CF_2$-$CF_2$-$CF_2$-$CF_2$-O-; and
(V) -$(CF_2)_j$-CFZ-O- wherein j is an integer chosen from 0 and 1 and Z is a fluoropolyoxyalkene chain comprising from 1 to 10 recurring units chosen among the classes (I) to (IV) here above;

and mixtures thereof.
The microemulsions of PFPE used in the process as above described are notably described in US Patents N° 4,864,006 and 4,990,283, whose disclosures are herein incorporated by reference. Otherwise, microemulsion of PFPE having non reactive end groups or end groups optionally containing one or more atoms of H, Cl instead of fluorine are described in US patent N° 6,297,334.
The molecular weight of perfluoropolyethers (PFPE) which can be used can also be lower than 500, for example 300 as number average molecular weight. The microemulsions obtained with the use of PFPE having a low molecular weight, in the range of 350-600, preferably 350-500, can be used advantageously in the applications wherein their quantitative removal is required.
The surfactants which can be used both for preparing the microemulsion and during the polymerization, are (per)fluorinated surfactants known in the prior art and in particular are those described in the cited patents or those having one end group wherein one or more fluorine atoms are substituted by chlorine and/or hydrogen. Among (per) fluorinated surfactants, anionic (per)fluorinated surfactants, having a (per)fluoropolyether or (per)fluorocarbon structure, having for example carboxylic or sulphonic end groups salified with ammonium ions, alkaline or alkaline-earth metals, cationic (per)fluorinated surfactants, for example quaternary ammonium salts, and non ionic (per)fluorinated surfactants, can be mentioned. These surfactants can also be used in admixture. Anionic (per)fluorinated surfactants are preferred and those having salified carboxylic end groups are more preferred.
Optionally in the process for preparing polymer (F) nanoparticles, iodinated and brominated chain transfer agents can be used. $R_f$¤$I_2$ can for example be mentioned, wherein $R_f$¤ is a divalent perfluorocarbon moiety comprising from 4 to 8 carbon atoms
Processes comprising a microemulsion polymerization step as described in US 6,297,334, whose disclosures are herein incorporated by reference, are particularly suitable for preparing dispersion in water of polymer (F) nanoparticles having an average primary particle size of less than 50 nm.
The latex obtained from microemulsion polymerization can be coagulated prior to polymerizing the acrylic monomer (AM) as above described. The coagulants for the polymer (F) are those known in the coagulation of fluoropolymers latices, for example aluminium sulfate, nitric acid, chloridric acid, calcium chloride. Calcium chloride is preferred. The amount of coagulants depends on the type of the used coagulant. Amounts in the range from 0.001 % to 30 % by weight with respect to the total amount of water in the reaction medium, preferably in the range from 0.01 % to 5 % by weight, can be used.
Preferably, the latex is not coagulated prior to polymerizing acrylic monomer (AM).
The dispersion (D) has advantageously a polymer (F) content of less than 50 % wt, preferably of less than 45% wt, more preferably of less than 40% wt, still more preferably of less than 35% wt, most preferably of less than 30 % wt.
Excellent results have been obtained with dispersions (D) having a polymer (F) content of less than 25 % wt.
The content of polymer (F) of the dispersion (D) can be determined by weight loss at 150°C for 1 hour, by weighting about 20 grams of the dispersion in a glass beaker, putting it in a oven for 1 hour at 150 °C, according to the following formula :

$$\text{Polymer (F) content} = \frac{\text{weight after drying}}{\text{initial latex weig ht}} \cdot 100$$

Thus, the dispersions of polymer (F) nanoparticles as obtained from the processes as above described can be advantageously concentrated and/or diluted to obtain the desired polymer (F) content. Preferably, the dispersions as above described are diluted by addition of water.

The step of polymerizing the acrylic monomer (AM) in the presence of the dispersion (D) is advantageously carried out according to known techniques, preferably in aqueous emulsion, in the present of a suitable radical initiator, at a temperature comprised between -60° and 150° C, preferably between -20°C and 100° C, more preferably between 0° and 80°C. The reaction pressure is advantageously comprised between 0.5 and 180 bar, preferably between 5 and 140 bar.

The polymerization reaction of acrylic monomer (AM) is advantageously initiated using a conventional free radical initiator, such as, notably, an organic peroxide compound, such as e.g. benzoyl peroxide, a persulfate compound, such as e.g. potassium or ammonium persulfate, an azonitrile compound, such as e.g. 2,2'-azobis-2,3,3-trimethylbutyronitrile, or a redox initiator system, such as e.g. a combination of cumene hydroperoxide, ferrous sulphate, tetrasodium pyrophosphate and a reducing sugar or sodium formaldehyde sulfoxylate.

A chain transfer agent such as, e.g., a $C_{9-13}$ alkyl mercaptan compound, such as nonyl mercaptan, t-dodecyl mercaptan, may, optionally, be added during the polymerization of acrylic monomer (AM) to reduce the molecular weight of polymer (A).

The core-shell particles can be advantageously recovered from acrylic monomer (AM) polymerization step by methods well-known in the art, like, for example, filtration, centrifugation, coagulation, settlement and decantation and the like, to separate out dewatered core-shell particles, which can be further dried by standard techniques.

Thus the process of the invention can optionally comprise a separation step and/or a drying step.

The core-shell particle as above described can be advantageously used as ingredients or additives in polymer compositions; the Applicant has found, without its findings limiting the scope of the invention, that when using such core-shell particles, a better dispersion of polymer (F) nanoparticles in a polymer composition can be achieved, enabling transparency of composition thereof to be achieved.

Should the core-shell particles be provided as an aqueous dispersion, said dispersion can be purified from fluorinated surfactants used in polymerization steps. In one preferred embodiment, the core-shell dispersion is contacted with anion-exchange resin in order to eliminate fluorinated surfactant from the dispersion. Generally when the acrylic polymer contains ionic groups, this step can be done without the addition of non-ionic surfactants. Generally, the purified core-shell dispersions are essentially free from fluorinated surfactants, i.e. the fluorinated surfactants content is less than 100 ppm, preferably less than 5 ppm. If required, other purification methods from fluorinated surfactants can be employed, like those cited in EP1584632 and EP1526142. Optionally, the purification from fluorinated surfactants can be carried out before the step of acrylic shell polymerization.

Thus the patent application also relates to the use of the core-shell particle as above described for improving dispersion of polymer (F) nanoparticles in a polymer composition. Said polymer composition advantageously comprises at least one acrylic polymer (A) as above described.

When core-shell particles are used as ingredients/additives, they are used in an amount so that in the final composition there is an amount of polymer (F) of advantageously at least 0.01 % wt, preferably of at least 0.05 % wt, most preferably of at least 0.1 % wt, based on the total weight of the final composition.

When core-shell particles are used as ingredients/additives, they are used in an amount so that in the final composition there is an amount of polymer (F) of advantageously at most 30 % wt, preferably of at most 20 % wt, most preferably of at most 10 % wt, based on the total weight of the final composition.

The core-shell particles as above described can be used notably as additive in polymer compositions for improving flammability behaviour, friction and wear properties, without negatively affect transparency.

The present invention also relates to a polymer composition comprising the core-shell particle as above described.

Advantageously the polymer composition comprises in addition to the core-shell particle of the invention at least one additional polymer component.

The polymer composition of the invention is advantageously transparent.

Thus, the common characteristics of the inventive composition that makes it transparent is that it (1) does not reflect much (i.e. advantageously less than 50 %, preferably less than 30 %) of incoming light from its surface, (2) does not absorb much (i.e. advantageously less than 50 %, preferably less than 30 %) of said incoming light, and (3) is uniform enough not to scatter much (i.e. advantageously less than 50 %, preferably less than 30 %) of said incoming light.

According to ASTM D 1746, transparency can be determined by small-angle scattering. A typical assembly for determining transparency is sketched in Figure 1. A light source (1) emits a light radiation which is passed though a collimator (2) to guide incident beam towards the sample specimen (4); intensity of incident light beam (3) $I_i$ and of transmitted light (8) deflected of less than 0.1 degree $I_r$ is measured; an aperture (7) avoids reflected (5) and scattered or deflected (6) light to reach the detector (9).

Transparency is thus expressed as percentage as follows :

$$\%T = \frac{I_r}{I_i} \times 100$$

The composition of the invention has a transparency of advantageously more than 40 %, preferably of more than 50 %, more preferably more than 60 %, still more preferably of more than 65 %, even more preferably of more than 70 %, according to ASTM D 1746, when measured on sheets having a thickness of 100 $\mu$m.

Excellent results have been obtained with a composition having a transparency of more than 80 %, when measured on sheets having a thickness of 100 $\mu$m.

Preferably, the additional polymer component comprises at least one acrylic polymer (A) as above defined.

The additional polymer component may be the same polymer (A) which the shell of the core-shell particles of the invention consists essentially of or may be a different polymer (A).

Preferably, the additional polymer component is a polymer (A) which is miscible with the polymer (A) which the shell consists essentially of.

For the purpose of the invention, the term "miscible" should be understood to mean that the polymer (A) of the additional polymer component and the polymer (A) of the shell of the core-shell particles yield in the composition according to the invention a single homogeneous phase, showing only one glass transition temperature.

Most preferably, the additional polymer component is a polymer (A) which is the same polymer (A) which the shell consists essentially of.

The compositions of the invention advantageously comprises at least 0.01 % wt, preferably at least 0.05 % wt, most preferably at least 0.1 % wt, based on the total weight of the composition, of TFE polymer (F) derived from the core-shell particles of the invention.

The compositions of the invention advantageously comprises at most 30 % wt, preferably at most 20 % wt, most preferably at most 10 % wt, based on the total weight of the composition, of TFE polymer (F) derived from the core-shell particles of the invention.

Concentrations of the polymer (F) above 30 wt %, with respect to the total weight of the composition, are undesirable since these amounts can adversely affect the processability and can create a perlescent effect, making colour matching a problem.

The compositions of the invention can be manufactured by standard processes well-known to those skilled in the art, said processes comprising mixing the core-shell particle as above detailed and the other ingredients.

Optionally, fillers, heat stabilizer, anti-static agents, extenders, reinforcing agents, organic and/or inorganic pigments like $TiO_2$, carbon black, acid scavengers, such as MgO, flame-retardants, smoke-suppressing agents may be added to the composition during said compounding step.

Still object of the invention is an article comprising the core-shell particle as above detailed or the composition as above defined.

Advantageously the article is an injection molded article, an extrusion molded article, a machined article, a coated article or a casted article.

The article of the invention can be manufactured by standard processes well-known to those skilled in the art; said processes typically comprise processing in solution and/or in the melt.

Non-limitative examples of articles are aircraft interior components, such as window covers, ceiling panels, sidewall panels and wall partitions, display cases, mirrors, sun visors, window shades, stowage bins, stowage doors, ceiling overhead storage lockers, serving trays, seat backs, cabin partitions, and ducts.

The invention will be explained in more detail with reference to the following examples whose purpose is merely illustrative and not limitative of the scope of the invention.

Examples

<u>Properties of the polymer (F) nanoparticles dispersion in water used in the examples</u>

The following polymer (F) aqueous dispersions were used in the examples for the synthesis of core-shell particles:

Table 2

| Sample | Polymer (F) composition | average primary particles size | Particles shape | Solids content |
|---|---|---|---|---|
| Disp - (1) | TFE/ MDO | 39 nm | spherical | 347.6 g/l |
| Disp - (2) | TFE homopolymer | 36 nm | spherical | 305.4 g/l |

In table 2, the term MDO designates the perfluorodioxole of formula

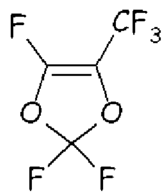

In Table 2, the average primary particle size of the polymer (F) is the average primary particle size of the core-shell particles prepared therefrom.

Properties of the acrylic monomer

The following acrylic monomer(s) were employed in the polymerization runs:

Table 3

| Acrylic monomer(s) | Composition |
|---|---|
| MMA | Methylmethacrylate (100% wt) |
| Mix-1 | Methylmethacrylate (39 % wt); ethylacrylate (57 % wt); methacrylic acid (4 % wt) |
| Mix-2 | Butyl acrylate (96 % wt); methacrylic acid (4 % wt) |

Average primary particle size determination by PCS

The average primary particle size of the core was measured by photon correlation spectroscopy (PCS) (method also referred to as dynamic laser light scattering (DLLS) technique) according to the method described in B. Chu "Laser light scattering" Academic Press, New York (1974), following ISO 13321 Standard, using a Malvern Zetasizer 3000 HS equipment at 90° scattering angle, using a 10mV He-Ne laser source and a PCS software (Malvern 1.34 version) on latex specimens (Disp-(1), Disp-(2)) diluted with bidistilled ), water and filtered at 0.2 μm on Millipore filter. Average particle size of primary particles (APPS) was determined following equation (C.10) of annex C of ISO 13321 as the harmonic intensity-averaged particle diameter $X_{PCS}$.

Same procedure was applied for determining the average primary particle size of the core-shell particles.

General polymerization procedure

In a jacketed reactor having an inner volume of 1 litre were introduced under nitrogen atmosphere the required amount of polymer (F) dispersion and, if needed, water. Reaction mixture was then heated at the set-point temperature (75°C) under mild stirring (300 rpm). The acrylic monomer(s) was then slowly added. Then a solution of the radical initiator (potassium persulfate) in water was added, so as to obtain a molar ratio initiator/acrylic monomer(s) of about 1/800. Reaction was pursued during 23 hours. At the end, reaction mixture was cooled down and core-shell particles dispersion was characterized by photon correlation spectroscopy (PCS) and thermogravimetric analysis (TGA).

Thermogravimetric analysis (TGA)

Core-shell particles have been dried and submitted to TGA analysis according to ISO 11358 standard.

Weight loss around 400°C was related to the weight content of the shell consisting essentially of the acrylic polymer (A), while the weight loss around 600°C was related to the thermal decomposition of the core of polymer (F). Weight percent of polymer (A) and polymer (F) were thus determined as a function of weight losses respectively around 400°C and 600°C.

Figure 2 is a plot of TGA curves (weight loss % as a function of temperature in °C) for (A) polymer (F) of Disp-1; (B) core-shell particles of example 7; and (C) an acrylic polymer (A), obtained from polymerization of Mix-1 in the absence of polymer (F).

Examples of core-shell particles preparation

Table 4 summarizes results and core-shell particles characterization from polymerization runs with Disp-(1) and Mix-1; Table 5 summarizes results and core-shell particles characterization from polymerization runs with Disp-(1)

and Mix-2; Table 6 summarizes results and core-shell particles characterization from Disp-(2) and MMA.

Core-shell particles obtained in runs 1 to 31 were shaped to yield plaques having a thickness of 100 μm. The plaques were found to be transparent, i.e. were found to have a transparency according to ASTM D 1746 of more than 90%.

Table 4

| run | Polymer (F) dispersion (ml) | Acrylic monomer (ml) | Polymer (F) in core-shell particles (% wt) (**) | Yield of acrylic monomer polymerization (% wt) | APPS (*) |
|---|---|---|---|---|---|
| 1 | Disp - (1) (5.6 ml) | Mix-1 (70 ml) | 3.6 | 82.3 | 371.8 |
| 2 | Disp - (1) (11.33 ml) | Mix-1 (70 ml) | 6.7 | 98.9 | 368.8 |
| 3 | Disp - (1) (22.66 ml) | Mix-1 (70 ml) | 12.3 | 74.3 | 256.2 |
| 4 | Disp - (1) (33.99 ml) | Mix-1 (70 ml) | 16.5 | 81.5 | 193.8 |
| 5 | Disp-(1) (57.8 ml) | Mix-1 (70 ml) | 36.3 | 91.6 | 109.4 |
| 6 | Disp - (1) (134.9 ml) | Mix-1 (50 ml) | 69.0 | 85.0 | 98.5 |
| 7 | Disp - (1) (202.4 ml) | Mix-1 (50 ml) | 58.3 | 78.4 | 101.2 |
| 8 | Disp - (1) (314.8 ml) | Mix-1 (50 ml) | 68.7 | 84.6 | 81.2 |
| 9 | Disp - (1) (269.8 ml) | Mix-1 (25 ml) | 83.1 | 79.1 | 78.1 |
| 10 | Disp - (1) (607.2 ml) | Mix-1 (25 ml) | 88.5 | 80.4 | 75.4 |

(*) APPS is the average primary particle size of the so-obtained core-shell particles.
(**) Weight percent of polymer (F) in core-shell particles was determined by thermogravimetric analysis.

Table 5

| run | Polymer (F) dispersion (ml) | Acrylic monomer (ml) | Polymer (F) in core-shell particles (% wt) (**) | Yield of acrylic monomer polymerization (% wt) | APPS (*) |
|---|---|---|---|---|---|
| 11 | Disp - (1) (5.4 ml) | Mix-2 (70 ml) | 3.6 | 90.8 | 262.5 |
| 12 | Disp - (1) (10.8 ml) | Mix-2 (70 ml) | 7.3 | 92.3 | 213.8 |
| 13 | Disp - (1) (21.6 ml) | Mix-2 (70 ml) | 12.5 | 88.4 | 174.8 |
| 14 | Disp - (1) (32.4 ml) | Mix-2 (70 ml) | 16.9 | 79.5 | 116.7 |
| 15 | Disp - (1) (55.4 ml) | Mix-2 (50 ml) | 30.6 | 81.6 | 79.1 |
| 16 | Disp - (1) (86.2 ml) | Mix-2 (50 ml) | 33.8 | 95.6 | 77.0 |
| 17 | Disp - (1) (129.3 ml) | Mix-2 (50 ml) | 47.7 | 97.1 | 70.8 |
| 18 | Disp - (1) (193.9 ml) | Mix-2 (50 ml) | 60.1 | 88.3 | 72.9 |
| 19 | Disp - (1) (301.7 ml) | Mix-2 (50ml) | 69.9 | 81.5 | 66.7 |
| 20 | Disp - (1) (258.6 ml) | Mix-1 (25 ml) | 81.5 | 93.5 | 62.5 |

(*) APPS is the average primary particle size of the so-obtained core-shell particles.
(**) Weight percent of polymer (F) in core-shell particles was determined by thermogravimetric analysis.

Table 6

| run | Polymer(F)dispersion (ml) | Acrylic monomer (ml) | Polymer (F) in core-shell particles (% wt) (**) | Yield of acrylic monomer polymerization (% wt) | APPS (*) |
|---|---|---|---|---|---|
| 21 | Disp - (2) (4.3 ml) | MMA (50 ml) | 3.4 | 93.5 | 114.2 |
| 22 | Disp - (2) (8.5 ml) | MMA (50 ml) | 5.9 | 93.7 | 95.0 |
| 23 | Disp - (2) (18.2 ml) | MMA (50 ml) | 15.4 | 85.8 | 92.4 |
| 24 | Disp - (2) (29.3 ml) | MMA (50 ml) | 24.1 | 79.2 | 88.1 |
| 25 | Disp - (2) (57.3 ml) | MMA (50 ml) | 28.8 | 90.5 | 83.7 |
| 26 | Disp - (2) (89 ml) | MMA (50 ml) | 43.7 | 91.0 | 66.3 |
| 27 | Disp - (2) (133.5 ml) | MMA (50 ml) | 48.1 | 89.6 | 52.1 |
| 28 | Disp-(2) (200.3 ml) | MMA (50 ml) | 61.9 | 79.9 | 48.2 |
| 29 | Disp - (2) (311.6 ml) | MMA (50 ml) | 67.2 | 85.9 | 46.7 |
| 30 | Disp - (2) (267.1 ml) | MMA (25 ml) | 75.6 | 86.1 | 45.2 |
| 31 | Disp - (2) (150.2 ml) | MMA (6.25 ml) | 87.9 | 84.7 | 44.6 |

(*) APPS is the average primary particle size of the so-obtained core-shell particles.
(**) Weight percent of polymer (F) in core-shell particles was determined by thermogravimetric analysis.

Figure 3 shows the primary particle size distribution of core-shell particles obtained from example 12. Ordinate is the intensy (arbitrary units) as a function of the diameter in nm (in abscissa).

## Claims

**1.** A core-shell particle comprising : - a core consisting essentially of at least one tetrafluoroethylene (TFE) polymer [polymer (F)], said core having an average primary particle size of less than 50 nm; and - a shell consisting essentially of at least one acrylic polymer [polymer (A)], said polymer (A)
comprising recurring units, more than 50 % by moles of said recurring units being derived from at least one ethylenically unsaturated monomer having directly bonded to one of the $sp^2$ carbon atoms of the ethylenic unsaturation at least one group of formula:

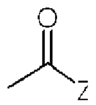

wherein Z is a group selected among -OR', wherein R' can be a hydrogen atom or a $C_{1-10}$ hydrocarbon group; and -NR"R"', wherein R" and R"', equal or different each other, can be independently a hydrogen atom or a $C_{1-10}$ hydrocarbon group [hereinafter, acrylic monomer (AM)].

**2.** The core-shell particle of claim 1, **characterized in that** the polymer (F) is chosen among homopolymers of tetrafluoroethylene (TFE) or copolymers of TFE with at least one ethylenically unsaturated comonomer [comonomer (CM)] , said comonomer being present in the TFE copolymer in an amount from 0.01 to 3 % by moles, preferably from 0.01 to 1 % by moles, with respect to the total moles of TFE and comonomer (CM).

**3.** The core-shell particle of claim 2, **characterized in that** the comonomer (CM) is chosen among hexafluoropropylene, perfluoromethylvinylether, perfluoroethylvinylether, perfluoropropylvinylether, perfluorodioxole of formula :

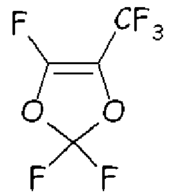

and mixtures thereof.

**4.** The core-shell particle of anyone of preceding claims, **characterized in that** it comprises from 3 to 95 wt % of polymer (F) based on the total weight of the core-shell particle.

**5.** The core-shell particle of anyone of preceding claims, **characterized in that** it has a core of average primary particle size of more than 20 nm and less than 40 nm.

**6.** The core-shell particle of anyone of preceding claims, **characterized in that** the acrylic monomer (AM) is selected from alkyl acrylates whose alkyl radicals are linear or branched, optionally substituted with a hydroxyl or ether function, and which contain from 1 to 10 carbon atoms, alkyl methacrylates whose alkyl radicals are linear or branched, optionally substituted with a hydroxyl or ether function, and which contain from 1 to 10 carbon atoms, and mixtures thereof.

**7.** The core-shell particle of anyone of preceding claims, **characterized in that** the acrylic monomer is chosen from methyl methacrylate, methyl acrylate, ethyl acrylate, n-butyl acrylate, acrylic and methacrylic acid.

**8.** A process for manufacturing a core-shell particle comprising : - a core consisting essentially of at least one TFE polymer [polymer (F)], said core having an average primary particle size of less than 50 nm; and - a shell consisting essentially of at least one acrylic polymer [polymer (A)], said process comprising : (i) preparing a dispersion of polymer (F) nanoparticles in water [dispersion (D)]; (ii) polymerizing at least one acrylic monomer (AM) in the presence of said dispersion (D).

**9.** The process according to claim 8, **characterized in that** the dispersion (D) is obtained from a process comprising a microemulsion polymerization step comprising : 1. preparing an aqueous microemulsion of perfluoropolyether (PFPE) in water with a fluorinated surfactant, wherein the PFPE is an oligomer comprising recurring units (R*), said recurring units comprising at least one ether linkage in the main chain and at least one fluorine atom (fluoropolyoxyalkene chain); 2. polymerizing a monomer mixture comprising TFE in a aqueous medium comprising said microemulsion and a water-soluble radical initiator.

**10.** The process according to claim 9, **characterized in that** the recurring units R* of the (per)fluoropolyether are selected from the group consisting of : (I) -CFX-O-, wherein X is -F or $-CF_3$; and (II) $-CF_2$-CFX-O-, wherein X is -F or $-CF_3$; and (III) $-CF_2-CF_2-CF_2$-O-; and (IV) $-CF_2-CF_2-CF_2-CF_2$-O-; and (V) $-(CF_2)_j$ -CFZ-O- wherein j is an integer chosen from 0 and 1 and Z is a fluoropolyoxyalkene chain comprising from 1 to 10 recurring units chosen among the classes (I) to (IV) here above; and mixtures thereof.

**11.** Use of the core-shell particle according to anyone of claims 1 to 7 or obtained by the process according to anyone of claims 8 to 10 for improving dispersion of polymer (F) nanoparticles in a polymer composition.

**12.** A polymer composition comprising the core-shell particle according to anyone of claims 1 to 7 or obtained by the process according to anyone of claims 8 to 10.

**13.** An article comprising the core-shell particle according to anyone of claims 1 to 7 or obtained by the process according to anyone of claims 8 to 10 or the composition according to claim 12.

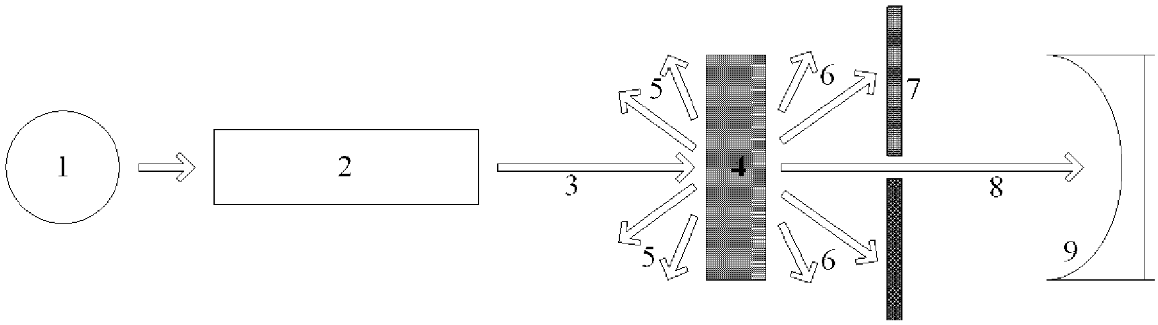


Fig. 1

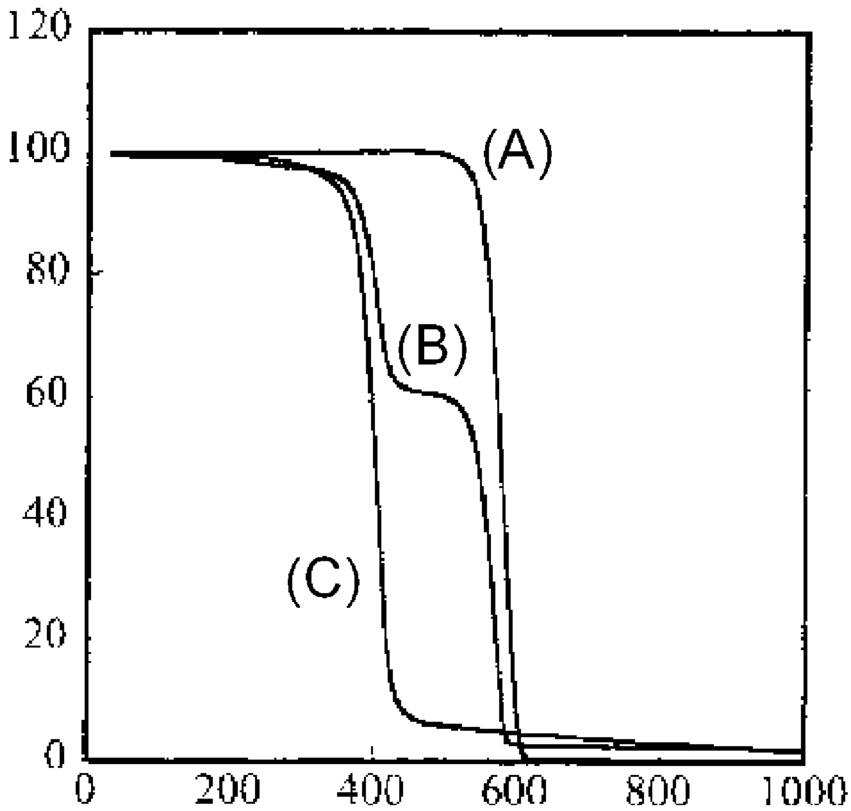


Fig. 2

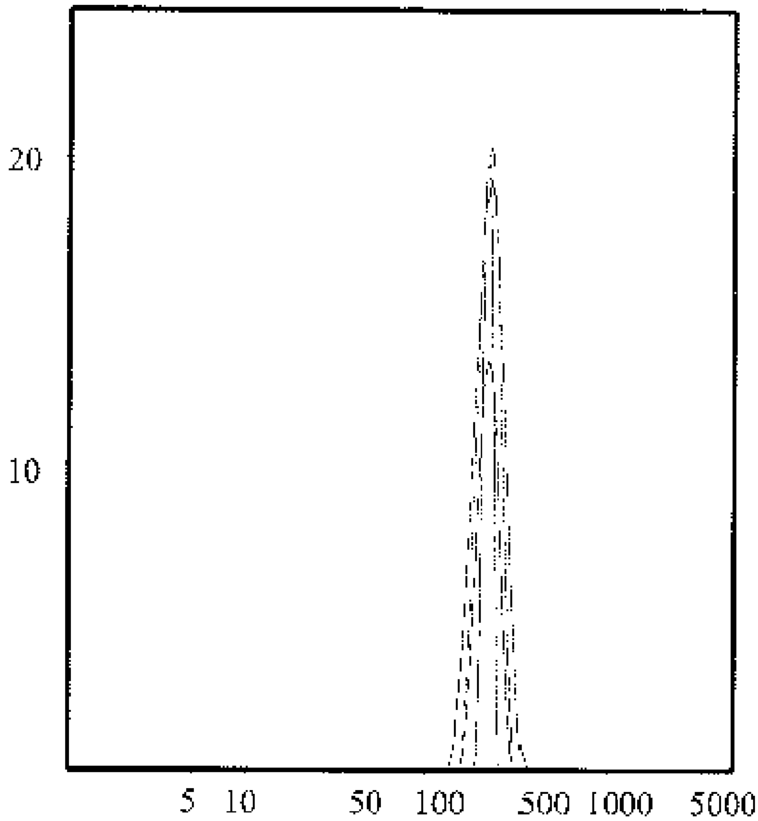


Fig. 3

European Patent Office

# EUROPEAN SEARCH REPORT

Application Number
EP 06 11 3122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/143068 A1 (HONDA SOUICHIRO ET AL) 22 July 2004 (2004-07-22) * claim 7; example 1 * | 1-13 | INV. C08F259/08 |
| X | EP 1 469 044 A (ASAHI GLASS COMPANY, LIMITED) 20 October 2004 (2004-10-20) * paragraphs [0042], [0043]; claim 1; example 1 * | 1-13 | |
| A | EP 1 243 604 A (SOLVAY SOLEXIS S.P.A) 25 September 2002 (2002-09-25) * claims * | 1-13 | |

TECHNICAL FIELDS SEARCHED (IPC)
C08F

The present search report has been drawn up for all claims

| Place of search | Date of completion of the search | Examiner |
|---|---|---|
| Munich | 8 June 2006 | Wirth, M |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 11 3122

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2006

| Patent document cited in search report | Publication date | Patent family member(s) | Publication date |
|---|---|---|---|
| US 2004143068 A1 | 22-07-2004 | NONE | |
| EP 1469044 A | 20-10-2004 | CA 2473964 A1 | 31-07-2003 |
| | | CN 1620484 A | 25-05-2005 |
| | | WO 03062326 A1 | 31-07-2003 |
| | | JP 2003213196 A | 30-07-2003 |
| | | US 2004266914 A1 | 30-12-2004 |
| EP 1243604 A | 25-09-2002 | DE 60201619 D1 | 25-11-2004 |
| | | DE 60201619 T2 | 27-10-2005 |
| | | IT MI20010580 A1 | 20-09-2002 |
| | | JP 2002327026 A | 15-11-2002 |
| | | US 2002193495 A1 | 19-12-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 952452 A
- EP 735093 A
- EP 739914 A
- US 5679741 A
- US 4864006 A
- US 4990283 A
- US 6297334 B
- EP 1584632 A
- EP 1526142 A

### Non-patent literature cited in the description

- **KIPP, B.E. et al.** Preparation of PTFE and PTFE/PMMA Core-Shell composite particles in CO2/aqueous systems. *Polym. Prepr (Am. Chem. Soc., Div. Polym. Chem.),* 1997, vol. 38 (1), 76-77
- **B. CHU.** Laser light scattering. Academic Press, 1974